# EUROPÄISCHE PATENTSCHRIFT

(11) **EP 1 524 745 B1**
(45) Veröffentlichungstag und Bekanntmachung des Hinweises auf die Patenterteilung: **22.11.2006**
(21) Anmeldenummer: 04104280.5
(22) Anmeldetag: 06.09.2004
(51) Int. Cl.: H02G 3/12

(54) **Unterputz-Einlasskasten**
Flush mounted inlet box
Boîte de connexion encastrée

(30) Priorität: 18.09.2003 CH 15972003
(43) Veröffentlichungstag der Anmeldung: 20.04.2005
(73) Patentinhaber: MAAG, Ulrich, 8184 Bachenbülach (CH)
(72) Erfinder: MAAG, Ulrich, 8184 Bachenbülach (CH)
(74) Vertreter: Walder, Martin Bernhard

(56) Entgegenhaltungen:
- CH-A- 561 970
- DE-A- 19 722 620
- DE-U- 29 612 729

## Beschreibung

Die Erfindung betrifft einen Unterputz-Einlasskasten, insbesondere zur Anordnung in einer Wärmedämmschicht.

Unter Unterputz-Einlasskasten wird z.B. eine Verteilerdose, eine Stecker-/Schalterdose, oder ein Lampendübel verstanden, welche unter Putz, also im Innern eines Bauteils einer Baute, anzuordnen sind. Solche Einlasskasten besitzen eine einseitig offene Kammer, an welche Kammer Elektrorohre anschliessbar sind und welche mit einer Abdeckplatte verschliessbar ist. In dieser Kammer können unterschiedliche Anschlusselemente angeordnet werden. Bei Verteilerdosen und Lampendübeln sind dies insbesondere Leitungsverbinder zum Anschliessen von weiterführenden Leitungen an die durch die Elektrorohre in die Kammer geführten Leitungen. Bei Einlasskasten für Steckdosen und Schalter sind es an die Leitungen anschliessbare Einbauteile für Steckdosen und Lichtschalter, welche in fertig eingebautem Zustand durch eine Abdeckplatte abgedeckt sind.

Einlasskasten für Steckdosen, Schalter, Lampenstellen, Sensoren und zur Aufnahme von Leitungsverbindern sind schon lange bekannt. Üblich sind heute Kunststoff- Einlasskasten oder elektrisch isolierte Aluminium- Einlasskasten. Solche Einlasskasten besitzen eine im Wesentlichen überall gleich starke Wandung aus Kunststoff oder Aluminium. Die Wandung von Kunststoff- Einlasskasten ist in der Regel mit Verstärkungsrippen versehen. Für die Einführung von Elektrorohren in die Kammer sind in der Wandung Einführungsstellen mit leicht ausbrechbarer oder leicht ausschneidbarer Wandung vorgesehen. Diese entfernbaren Wandungsteile besitzen eine dünnere Wandstärke oder eine die Einführungsstelle umlaufende Kerbe in der Wandung. Für die Befestigung von einzubauenden Elektroteilen besitzen solche Einlasskasten eine Frontfläche rings um die Öffnung oder an vier Ecken der Kammer. Diese Frontfläche übersteht die Kammerwandung seitlich und hat eine geringe Plattenstärke. In diese Frontfläche können Schrauben zur Befestigung einer Frontplatte eingeschraubt werden. An der Frontplatte sind die einzubauenden Elektroteile befestigt. Am Einbauteil oder an der Frontplatte ist die Abdeckplatte befestigbar.

Bei der Montage der Frontplatte jedoch kann es geschehen, dass eine Schraube das Material der Frontfläche auseinandersprengt, so dass schliesslich eine Frontplatte beispielsweise nur an zwei oder drei der vier Ecken befestigt ist. Auch können schwerere Gegenstände wie Lampen nicht an der Frontfläche des Einbaukastens befestigt werden, sondern müssen im Bauteil selber, z.B. mit Dübeln befestigt werden. Die Befestigung mit Dübeln im Anschlussbereich einer Ausnehmung für einen Unterputz-Einlasskasten ist jedoch mit der Gefahr verbunden, dass Randbereiche des Untergrunds um die Ausnehmung zum Einlasskasten hin weggebrochen werden.

Die Einlasskasten selber werden gleichzeitig mit den Elektrorohren vom Elektriker in den Rohbau versetzt. Zur Befestigung der Einlasskasten werden diese mit Gips in einer gespitzen, gefrästen oder ausgesparten Vertiefung in ein Rohbauteil eingeklebt.

Sind die Einlasskasten in einer Wärmedämmschicht anzuordnen, zum Beispiel in einer Verbundfassade, so muss der Elektriker den Einlasskasten mit Abstand zur Wand oder zur Decke befestigen. Die Frontfläche des Einlasskastens muss etwa in der Ebene der Oberfläche der Dämmschicht liegen. In Verbundfassaden kann die Frontfläche 2 mm hinter der Oberfläche der Dämmschicht liegen. Sie darf jedoch nicht vorstehen. Die Dämmschicht hat aber mit 80 bis 300 mm und mehr Schichtstärke eine bedeutend grössere Abmessung als die Elementtiefe des Einlasskastens.

Um eine solche Montage eines Kunststoff- Einlasskastens im Bereich einer Schaumstoff-Dämmschicht zu ermöglichen, wurde ein Element entwickelt, wie es in der EP-A-0 710 751 offengelegt wurde. Dieses Element zur Befestigung von Apparaten und Gegenständen auf einer aussenisolierten Gebäudefassade oder auf einer isolierten Wand oder Decke besitzt ein am Mauerwerk zu befestigendes Basiselement. Das Basiselement liegt in montiertem Zustand mit einer Anschlagfläche gegen das Mauerwerk an. Vom Basiselement ragt ein eine geradlinige Führungsbahn bildender Träger rechtwinklig von der Anschlagfläche weg. Auf dem Träger ist ein Verankerungselement längsverschieblich gelagert und in jeder Verschiebelage feststellbar. Der Träger ist prismatisch oder kreiszylindrisch ausgebildet und wirkt teleskopierend mit einer am Verankerungselement ausgebildeten Führung zusammen. Das Verankerungselement besitzt eine Montagefläche, welche parallel zur Anschlagfläche angeordnet ist. Die Anschlagfläche und die Montagefläche liegen jeweils rings um den Träger bzw. die Führung vor. Die Verstellbarkeit des Abstands zwischen der Montagefläche und der Anschlagfläche reicht für Wärmedämmschichten von 80 bis 180 mm.

Derartige Elemente sind zwar für den Elektromonteur praktisch, ermöglichen sie ihm doch die Montage von Unterputz-Einlasskasten in einem praktisch beliebigen Abstand vor der Wand und bevor der Isoleur die Wärmedämmschicht verlegt hat. Anpassungen an die Dämmschichtdicke sind auch nach dem Verlegen der Elektrorohre und nach dem Einziehen der Leitungen in den Einlasskasten noch möglich, solange die Führung und der Träger noch zugänglich sind.

Nachteilig an diesem Element ist aber, dass der Isoleur die Dämmschicht an dieses Element anschliessen muss. Dabei ist es sehr aufwändig, den Bereich um die teleskopierende Führung zwischen der Anschlagfläche und der Montagefläche mit dem Dämmmaterial zu füllen. Es muss nämlich dazu die Montagefläche hinterfüllt werden, während der Einlasskasten aus dem Isolationsmaterial ausgeschnitten zu werden braucht. Dieser Bereich zwischen dem Einlasskasten und der Wand bleibt in der Folge oft als Hohlraum in der Aussendämmung bestehen, was sehr unerwünscht ist. Diese Stelle ist nicht nur ungenügend wärmegedämmt, sondern ist gefährdet für Gebäudeschäden infolge von kondensierender Feuchtigkeit.

Weiter nachteilig an diesem Teil ist, dass die Befestigung von Gegenständen an der Montagefläche oder einem Einlasskasten zu erfolgen hat, deren Material der Sprengkraft einer unüblich grossen eingeschraubten Schraube nachgebend reissen kann.

Es ist Aufgabe der Erfindung, einen Unterputz-Einlasskasten zu schaffen, in welchem Gegenstände mit praktisch beliebigen Schrauben befestigt werden können. In einer vorteilhaften Ausführungsform soll dieser Einlasskasten für eine Anordnung in Dämmschichten besonders geeignet sein. Dabei soll die Montage des Einlasskastens durch den Elektromonteur oder den Isoleur und der Anschluss der Dämmschicht an den Einlasskasten durch den Isoleur problemlos sein.

Diese Aufgabe wird erfindungsgemäss gelöst durch den Gegenstand des Patentanspruchs 1.

Ein Unterputz-Einlasskasten besitzt eine frontseitig offenen Kammer zur Aufnahme von elektrischen Anschlussteilen. Diese Kammer ist gebildet durch einen die Kammer rückwärtig wenigstens teilweise abschliessenden Kammerboden und eine die Kammer seitlich ringsum wenigstens teilweise abschliessende Kammerwandung. In einer Frontfläche des Einlasskastens ist eine frontseitige Öffnung der Kammer angeordnet. In der Frontfläche liegen um die Öffnung herum Montagebereiche vor, in welche Montageschrauben einschraubbar sind. Mit beispielsweise vier Montageschrauben kann eine Frontplatte auf die Frontfläche montiert werden. Ein solcher Einlasskasten ist erfindungsgemäss als Hartschaumstoffkörper ausgebildet. Die Körperoberfläche des Hartschaumstoffkörpers ist dabei im Wesentlichen durch den Kammerboden, die Kammerwandung, die Frontfläche, eine senkrecht zur Frontfläche stehende Umfassungsfläche und eine zur Frontfläche parallele rückwärtige Rückfläche gebildet. Zumindest von den Montagebereichen rückwärts ist der Hartschaumstoffkörper zwischen der Kammerwandung und der Umfassungsfläche derart prismatisch ausgeformt, dass darin die ganze Länge des Schraubenschafts (z.B. 2,5 cm, 4 cm, 6cm oder mehr) einer senkrecht in die Frontfläche eingeschraubten Montageschraube angeordnet werden kann.

Der Einlasskasten ist daher im Wesentlichen als Vollkörper ausgebildet. Die Bereiche zwischen der Kammer und der Umfassungsfläche sind daher hinter den Montagebereichen als voluminöse Körper ausgebildet und weisen keine Rücksprünge auf.

Weist die Umfassungsfläche mit der Frontfläche eine gemeinsame Kante auf, so besitzt der Hartschaumstoffkörper hinter den Montagebereichen einen Querschnitt parallel zur Frontfläche, der praktisch die Form der Frontfläche aufweist. Dieser Querschnitt erstreckt sich wenigstens über 2 bis 4 cm, vorzugsweise aber über die gesamte Kammertiefe oder gar die ganze Körpertiefe. Es ist nicht auszuschliessen, dass zwischen zwei Montagebereichen das Volumen des Einbaukastens minimalisiert ist. Dies ist insbesondere bei Einlasskästen mit minimaler Tiefe zweckmässig, welche Einlasskästen nicht für den Einbau in eine Wärmedämmung einer Verbundfassade vorgesehen sind.

Vorzugsweise weist die Umfassungsfläche auch mit der Rückfläche eine gemeinsame Kante auf. Daher ist der Hartschaumstoffkörper im Wesentlichen quaderförmig, wobei in wenigstens einer der sechs Flächen des Quaders eine Höhlung ausgebildet ist. Als Höhlung werden die Kammer, Ausnehmungen und Kanäle für Elektrorohre wie auch Vertiefungen zur Aufnahme eines Befestigungselements bezeichnet. Abgesehen von solchen funktionalen Höhlungen ist der Hartschaumstoffkörper möglichst voll ausgebildet.

Für die Anwendung des Einlasskastens in Verbundfassaden ist die Rückfläche zweckmässigerweise in einem Abstand zur Frontfläche angeordnet, welcher einer üblichen Dämmschichtstärke entspricht. Dadurch ist die Frontfläche im selben Abstand vom Untergrund angeordnet, wie die Oberfläche der Dämmschicht. Dank des expandierten Polystyrols oder eines anderen wärmedämmenden Schaumstoffs ist der Untergrund auch im Bereich des Einlasskastens optimal wärmegedämmt. Dank der Dichte des Schaumstoffs liegt um die Kammer herum ein Bereich vor, in den Holzschrauben eingeschraubt werden können zur Montage von Frontplatten oder Geräten.

Vorteilhaft ist im Hartschaumstoffkörper wenigstens eine Höhlung ausgebildet, in welche ein Elektrorohr eingelegt und an den Einlasskasten angeschlossen werden kann. Solche Höhlungen können senkrecht zu einer Seitenfläche ausgerichtete Ausnehmungen oder parallel zur Seitenfläche gerichtete Kanäle sein.

Zwischen einer Höhlung und der Kammer ist vorteilhaft eine Einführstelle vorgesehen, an welcher die Kammerwandung von blosser Hand oder mit Handwerkzeug in einer vorbestimmter Form ausbrechbar ist, um eine Leitung in die Kammer einzuführen.

Der Hartschaum wiegt zweckmässigerweise über 150 kg/ m3, vorzugsweise zwischen 160 und 200 kg/m3 und besonders bevorzugt zwischen 170 und 180 kg/m3. Je schwerer der Hartschaumstoff ist, desto besser sind die Ausreisswerte von darin eingeschraubten Schrauben.

Wenn auch andere Schaumstoffe denkbar sind, z.B. Polyuretanschaum, so wird, unter Anderem aus produktionstechnischen Gründen, ein expandierter Polystyrolschaum bevorzugt.

Zur einfachen Befestigung des Einlasskasten ist vorteilhaft ein Befestigungsteil vorhanden, welches mittels Schrauben an einem Untergrund befestigbar ist. Im Einlasskasten ist dann eine Vertiefung in der Rückfläche oder Seitenfläche ausgebildet. Diese Vertiefung ist zur kraft- und formschlüssigen Aufnahme des Befestigungsteils ausgelegt.

Das Befestigungsteil ist zweckmässigerweise ein Blechprofil, welches einen U-förmigen Querschnitt aufweist. Ein solches Profil ist einfach in der Herstellung und kann mit einfachen Mitteln an einem Untergrund befestigt werden. Die Seitenschenkel des u-förmigen Blechprofils können zwischen zwei parallele Wandungen geklemmt werden oder von aussen gegen zwei parallele Wandungen klemmen.

Vorteilhaft besitzt das Befestigungsteil als Widerhaken ausgebildete Kanten oder Spitzen, die in den Hartschaumstoffkörper einhaken können.

Zur besseren Klemmung kann das Befestigungsteil zusätzlich Klemmstellen aufweisen, mit welchen beim Zusammenfügen von Befestigungsteil und Hartschaumstoffkörper das Material des Hartschaumstoffkörpers zusammengepresst wird.

Das Blechprofil besitzt vorteilhaft einen aufgewölbten Boden in welchem Löcher für Befestigungsschrauben vorliegen. Mit dem Anziehen der Befestigungsschrauben wird der Boden gespannt, so dass eine Vergrösserung der Klemmwirkung zwischen Befestigungsteil und Einlasskasten erreicht wird.

Die Erfindung wird im Folgenden anhand der in den Figuren dargestellten Ausführungsbeispiele im Detail erläutert: Es zeigt
- Fig. 1: eine perspektivische Skizze eines ersten Ausführungsbeispiels eines erfindungsgemässen Unterputz-Einlasskastens,
- Fig. 2: eine perspektivische Skizze eines zweiten Ausführungsbeispiels eines erfindungsgemässen Einlasskastens für die Anordnung in einer Dämmschicht,
- Fig. 3: eine Seitenansicht des Einlasskastens gemäss Figur 2,
- Fig. 4: eine zweite Seitenansicht des Einlasskastens gemäss Figur 2,
- Fig. 5: eine Ansicht der Rückseite des Einlasskastens gemäss Figur 2,
- Fig. 6: eine Ansicht der Frontseite des Einlasskastens gemäss Figur 2,
- Fig. 7: ein Längsschnitt durch den Einlasskasten gemäss Figuren 2 bis 6, und durch den Einlasskasten gemäss Figuren 9 bis 11 entlang der Linie I-I,
- Fig. 8: einen Querschnitt durch den Einlasskasten gemäss Figuren 2 bis 6 entlang der Linie II-II,
- Fig. 9: eine Ansicht der Rückseite eines dritten Ausführungsbeispiels,
- Fig. 10: eine Ansicht der Frontseite des dritten Ausführungsbeispiels,
- Fig. 11: einen Querschnitt durch das dritte Ausführungsbeispiel in einer Parallelebene zu der Frontseite oder Rückseite,
- Fig. 12: eine Seitenansicht eines vierten Ausführungsbeispiels,
- Fig. 13: eine zweite Seitenansicht des vierten Ausführungsbeispiels,
- Fig. 14: eine Ansicht der Rückseite des vierten Ausführungsbeispiels,
- Fig. 15: eine Ansicht der Frontseite des vierten Ausführungsbeispiels,
- Fig. 16: ein Längsschnitt durch den Einlasskasten gemäss Figuren 12 bis 15, entlang der Linie IV-IV,
- Fig. 17: einen Querschnitt durch den Einlasskasten gemäss Figuren 12 bis 15 entlang der Linie V-V,
- Fig. 18: eine Seitenansicht zu einem fünften Ausführungsbeispiel
- Fig. 19: eine Seitenansicht zum Ausführungsbeispiel gemäss Figuren 12 bis 17,
- Fig. 20: einen Längsschnitt durch ein sechstes Ausführungsbeispiel,
- Fig. 21: eine perspektivische Skizze eines Halteelements für einen Einlasskasten gemäss einem der Ausführungsbeispiele gemäss Figuren 2 bis 20,
- Fig. 22: eine perspektivische Skizze eines alternativen Halteelements,
- Fig. 23 bis 25: perspektivische Skizzen von Halteelementen mit Mitteln zur Verhinderung einer Gleitbewegung des Einlasskastens relativ zum Halteelement,
- Fig. 26: eine perspektivische Skizze eines Halteelements für das erste Ausführungsbeispiel.

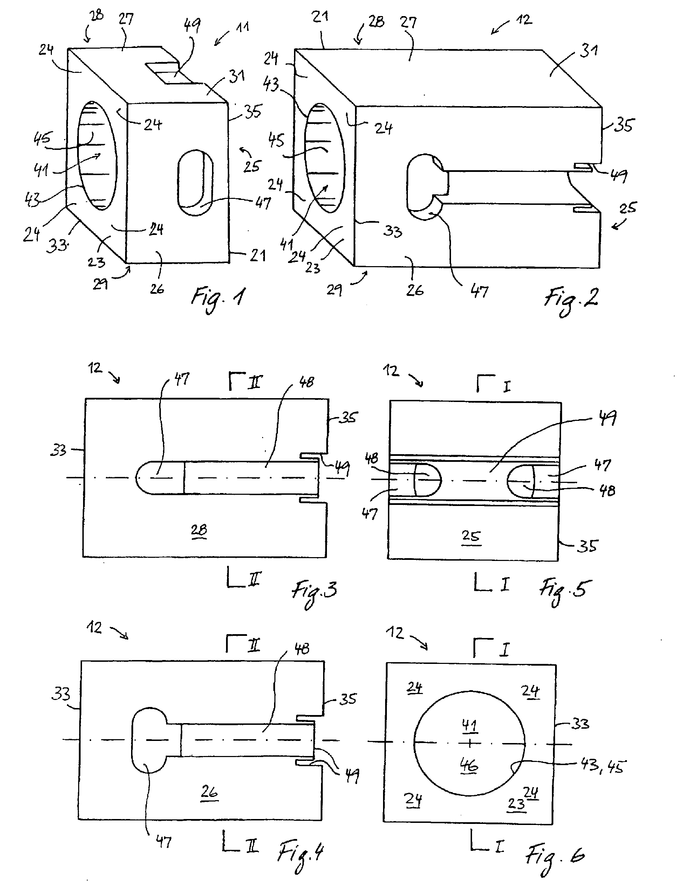

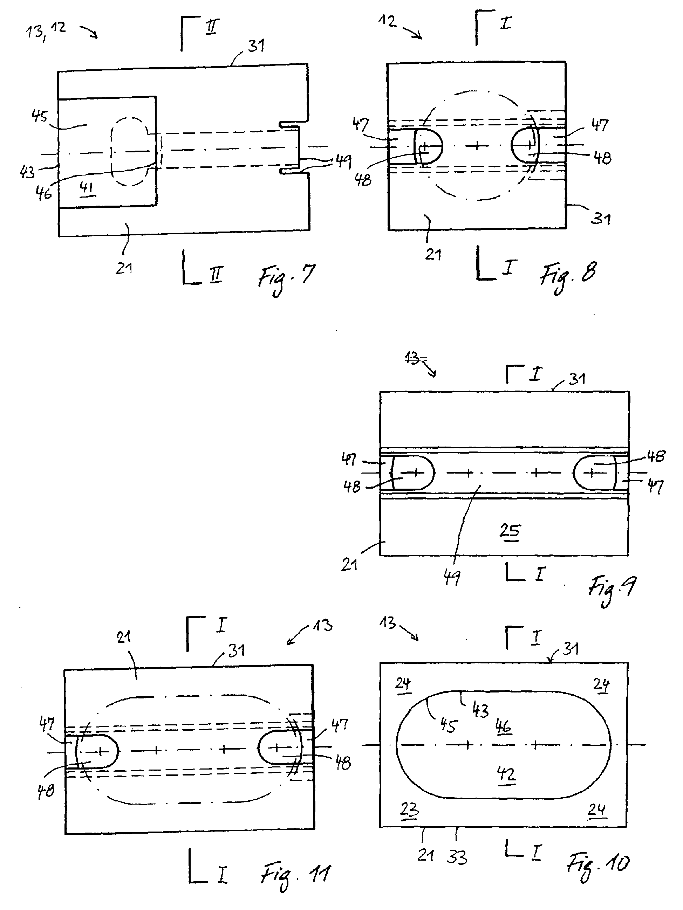

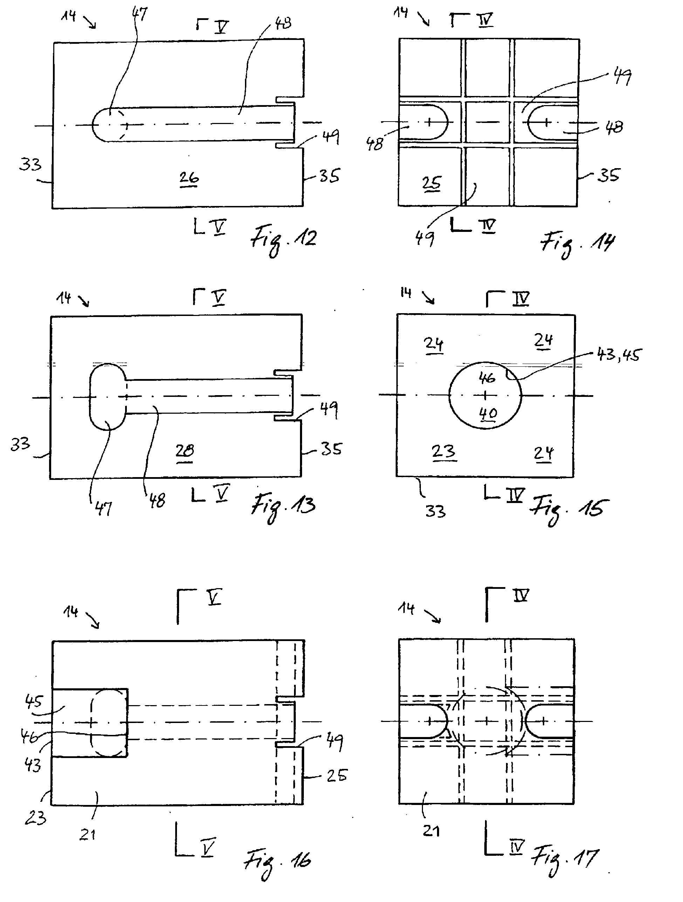

Der in Figur 1 dargestellte Unterputz-Einlasskasten 11 besteht aus expandiertem Polystyrol (EPS) mit einem Raumgewicht von 170 kg/m3. Der quaderförmige Körper 21 des Einlasskastens 11 besitzt eine Frontfläche 23, eine Rückfläche 25 und vier Seitenflächen 26,27,28,29. Die Körpermasse sind 98x 98 x 63 mm. Die Seitenflächen 26,27,28,29 bilden zusammen eine Umfassungsfläche 31, welche mit der Frontfläche 23 eine durchgehende gemeinsame Frontkante 33 und zusammen mit der Rückfläche 25 eine auf zwei gegenüberliegenden Seiten unterbrochene gemeinsame Rückkante 35 besitzt.

In der Frontfläche 23 ist eine kreisrunde Öffnung 43 zu einer zylindrischen Kammer 41. Die Kammer 41 ist durch eine zylindrische Kammerwand 45 und den in der Darstellung nicht sichtbaren Kammerboden abgeschlossen. Die Masse der Kammer sind durch die marktüblichen Anschlusselemente gegeben. Sie sind beispielsweise: Durchmesser 70mm, Tiefe 55mm.

In der Seitenfläche 26 ist eine Ausnehmung 47 ausgebildet. Die Ausnehmung ist oval, gibt Raum zum Einstecken von zwei Elektrorohren in die Ausnehmung und reicht bis an die Kammerwand 45 in den Körper 21 hinein. Die Kammerwand 45 ist an dieser Stelle etwa 2mm dick und kann daher von Hand ausgebrochen werden. In der gegenüberliegenden Seitenfläche 28 ist eine ebensolche Ausnehmung 47 ausgebildet. Diese Ausnehmungen 47 können auch kreisrund sein. Es kann vorteilhaft auf zwei unterschiedlichen Seiten jeweils eine andere Ausnehmung 47 vorhanden sein.

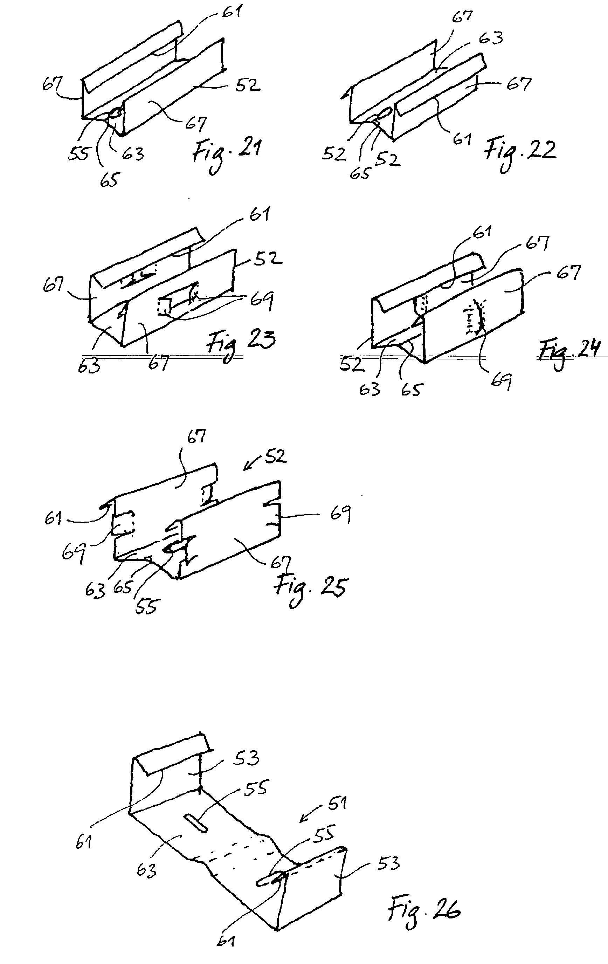

In der Seitenfläche 27 ist eine Vertiefung 49 ausgebildet, die zur Rückfläche 26 hin offen ist. Auf der gegenüberliegenden Seitenfläche 29 ist eine ebensolche Vertiefung 49 ausgebildet. In diese Vertiefungen 49 können die Haltearme 53 eines Halteelements 51 gemäss Figur 26 eingesteckt werden.

Dieses erste Ausführungsbeispiel eines erfindungsgemässen Unterputz-Einlasskastens 11 ist ein Einlasskasten für einen Schalter oder eine Steckdose. In die Kammer 41 kann ein herkömmliches Elektro-Anschlusselement eingesetzt werden, das für herkömmliche Unterputz-Einlasskasten geeignet ist. Der dargestellte Einlasskasten 11 kann auch als Verteildose genutzt werden.

Dieser Einlasskasten 11 weist den Vorteil gegenüber herkömmlichen Kunststoff-Einlasskästen auf, dass von der Frontfläche 23 eine Schraube mit der ganzen Länge ihres Gewindes in den geschäumten Körper 21 eingeschraubt werden kann, ohne wieder aus dem Körper auszutreten und ohne den Körper zu sprengen. Ohne Vorbohren können Holzschrauben, Blechschrauben oder Spanplattenschrauben in den Körper 21 des Einlasskastens 11 eingeschraubt werden. Diese Schrauben sind über die gesamte eingeschraubte Schaftlänge vom Material des Einlasskastens 11 umgeben. Daher ergibt sich eine sehr hohe Ausreisskraft, je nach Schraubengrösse und Schaumstoffgewicht von bis zu 130 kg pro Schraube.

In Figuren 2 bis 8 ist ein Einlasskasten 12 dargestellt, der analog zum Einlasskasten 11 in einer Frontseite 23 eine Öffnung 43 zu einer Kammer 41 aufweist. Die Kammerwandung 45 ist identisch geformt wie im ersten Ausführungsbeispiel. In den Seitenfläche 26 und 28 sind jeweils eine Ausnehmung 47 vorhanden für das Einstecken von ein (vergleiche Figur 3) oder zwei Elektrorohren (vergleiche Figur 4). Am Grunde der Ausnehmungen 47 ist die Kammerwandung 45 mit einer Wandstärke ausgebildet, die z.B. mit einem Schraubenzieher von Hand durchbrechbar ist. Die Seitenflächen 26,27,28,29 bilden zusammen die Umfassungsfläche 31, welche eine durchgehende gemeinsame Kante 33 mit der Frontfläche 23 und eine auf durch die Höhlungen in den Seiten flächen und der Rückfläche unterbrochene gemeinsame Kante 35 mit der Rückfläche 25 besitzt. Der Einlasskasten 12 ist ein Kunststoff-Hartschaumteil aus 170 kg/ m3 wiegendem EPS.

Im Unterschied zu dem ersten Ausführungsbeispiel besitzt dieses zweite Ausführungsbeispiel gemäss Figur 2 bis 8 eine Körpertiefe zwischen Frontfläche 23 und Rückfläche 25, die der Schichtstärke einer Dämmschicht entspricht. Gängige Dämmschichtstärken von Verbundfassaden sind 80, 100, 120, 140, 160, 180, und 200mm. Dargestellt ist ein Einlasskasten mit den Massen 98 x 98 x 123 mm. Andere Abstandmasse zwischen Frontfläche und Rückfläche sind entsprechend 83, 103, 143, 163, 183, 203, 223,..303 mm. Die Tiefe der Einlasskasten ist generell 3mm dicker als die Dämmschichtstärke einer Verbundfassade, weil zwischen den Einlasskasten und dem Untergrund keine Klebschicht vorgesehen wird.

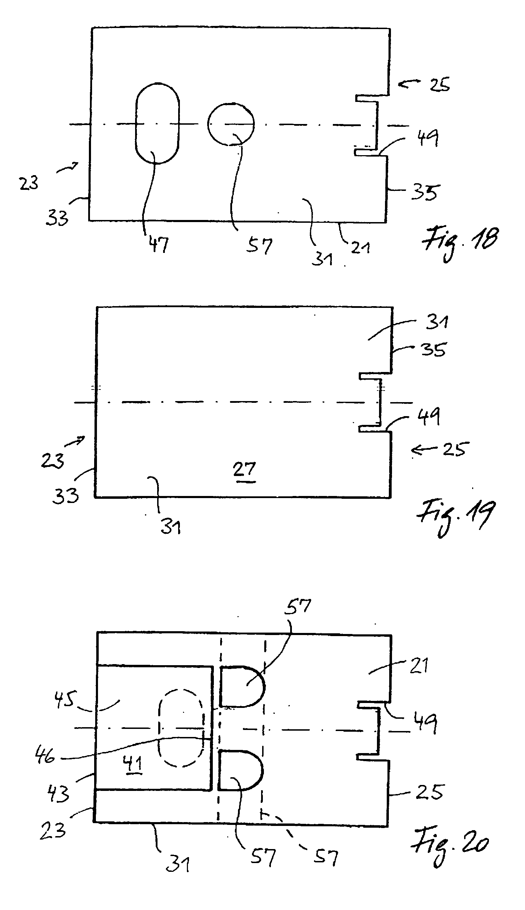

An die Ausnehmungen 47 schliesst ein Kanal 48 zum Einlegen eines Elektrorohrs an. Dieser Kanal 48 ist senkrecht zu der Frontfläche und der Rückfläche ausgerichtet und ist bei der Rückfläche 25 aus dem Körper 21 hinausgeführt. Der Kanal 48 besitzt eine grössere Tiefe als die Ausnehmung 47. Als Tiefe wird der Abstand der Seitenfläche zum Grund der Ausnehmung 47 bzw. des Kanals 48 bezeichnet. Der Kanal 48 ist bis an den Kammerboden 46 (siehe Fig. 6 und 7) herangeführt, wo der Kammerboden eine durchbrechbare Dicke aufweist. Der Kanal 48 ist über seine ganze Länge offen. Ein Elektrorohr kann daher am Grund des Kanals 48 angeordnet und durch den Kammerboden 46 hindurch an die Kammern 41 angeschlossen werden, oder es kann im äusseren Bereich des Kanals 48 parallel oder senkrecht zur Seitenfläche 26,28 liegend durch die Seitenwandung der Kammer 41 an die Kammer 41 angeschlossen werden.

Weiter unterscheidet sich das zweite Ausführungsbeispiel vom ersten durch eine anders gestaltete Vertiefung 49 zur Aufnahme eines Halteelements 52 (Figuren 21 bis 25). Die Vertiefung 49 im zweiten und den weiteren Ausführungsbeispielen ist eine geradlinige Profilierung in der Rückfläche 25. Diese Profilierung ist von einer Seitenfläche bis zur gegenüberliegenden durchgehend ausgebildet. Sie besitzt zwei voneinander beabstandete parallele und etwa 4 mm breite Einschnitte in Längsrichtung der Profilierung, die etwa 25 mm von der Rückfläche 25 in den Körper 21 hineinreichen. Zwischen diesen Einschnitten ist ein Mittelbereich lediglich etwa 5 mm in den Körper hinein ausgespart. Dies ergibt eine Aufnahme für ein Halteelement in Form einer U-förmigen Schiene 52.

Geeignete Schienen 52 sind in den Figuren 21 bis 25 dargestellt. Da die Vertiefung 49 von der einen Seitenfläche 26 mit einem Kanal 48 zur gegenüberliegenden Seitenfläche 28 mit einem ebensolchen Kanal 48 reicht, sind die Enden einer in die Vertiefung 49 eingesteckten Schiene 52 jeweils vom Kanal 48 her zugänglich. An diesen Enden besitzt die Schiene 52 deshalb in bevorzugten Ausführungen (Figuren 21 und 22) Löcher 55 zum Durchstecken des Schaftes einer Befestigungsschraube.

Die U-förmigen Schienen 52 und die diesen entsprechend profilierten Vertiefungen 49 erlauben einen Einlasskasten 12,13 (Figuren 9 bis 11) oder 14 (Figuren 12 bis 17) auf eine an einer Wand montierte Schiene 52 aufzustecken.

Der Unterputz-Einlasskasten 13 gemäss Figuren 9 bis 11 besitzt eine längliche Doppelkammer 42. Die Grösse einer solchen Doppelkammer ist durch die marküblichen Anschlusselemente gegeben. Sie sind beispielsweise: Breite 70 mm, Länge 120 mm, Tiefe 55 mm. Der Radius ist entsprechend 35 mm. Auch diese Doppelkammer besitzt an zwei gegenüberliegenden Seiten Anschlussstellen für Elektrorohre, welche identisch ausgebildet sind wie beim zweiten Ausführungsbeispiel mit der Bezugsziffer 12. Die Anschlussstellen mit einer etwa 2 mm dünnen Wandung sind an den Enden der Kammer 42 in Bezug auf deren Längsrichtung sowohl in der Seitenwand 45 als auch im Kammerboden 46 angeordnet. Bei den im Scheitelbereich der Kammer 52 angeordneten Anschlussstellen am Grund der Ausnehmung 47 ist die Kammerwandung 45 auf der Innenseite und am Grund der Ausnehmung 47 parallel gewölbt.

Die profilierte Vertiefung 49 in der Rückfläche 23 dieses dritten Ausführungsbeispiels ist ebenfalls von der Seitenfläche 26 zu der Seitenfläche 28 geführt und schneidet die in diesen Seitenflächen 26, 28 ausgebildeten Kanäle 48. Die grösseren Seitenflächen 27,29 weisen keine Vertiefung oder Ausnehmung auf. Sie sind rechteckig und von Kante zu Kante durchgehend ebenflächig ausgebildet.

Ein viertes Ausführungsbeispiel betrifft einen Lampendübel 14 gemäss Figuren 12 bis 17. Bei dem Lampendübel 14 ist die Anschlusskammer 40 mit einem kleineren Durchmesser ausgebildet als die Kammer 41 beim Einlasskasten 12. Der Durchmesser beträgt beispielsweise 40 mm. Ebenso kann die Tiefe geringer ausgebildet sein und beispielsweise lediglich 42 mm betragen. Diese Anschlusskammer muss auch keine Schalter oder Steckdosen aufnehmen, sondern lediglich Anschlussklemmen für Leitungen. Die Öffnung 43 dieser Anschlusskammer 40 ist dank des kleineren Durchmessers einfacher abzudecken mit z.B. einer Schürze einer Lampenfassung. Da der Lampendübel 14 aber ebenso grosse Aussenmasse aufweist wie der Einlasskasten 12 sind auf der Frontfläche grössere Montagebereiche 24 vorhanden, in welche Schrauben zum Befestigen einer Lampe oder eines Aussenfühlers oder dergleichen einschraubbar sind. Dieser erfindungsgemässe Lampendübel 14 erleichtert die Montage eines solchen Geräts sehr, da die Schrauben wie in Holz einschraubbar sind und nicht in Beton oder Backstein mit Dübeln verankert zu werden braucht. Es müssen bei den Schrauben auch keine bestimmten Masse oder Lochabstände eingehalten werden.

Die Ausnehmungen 47, Kanäle 48 und profilierten Vertiefungen 49 sind ebenso ausgebildet wie bei den anderen Ausführungsbeispielen 12 und 13. Nur sind die Ausnehmungen 47, die bis auf eine durchbrechbare Wandstärke an die Anschlusskammer 40 herangeführt sind, weiter in den Körper 21 hinein geführt, da die Kammerwandung einen kleineren Durchmesser aufweist. Dies hat zur Folge, dass die Kanäle 48 bei gleicher Ausbildung nicht an den Kammerboden 46 herangeführt, sondern lediglich in die Ausnehmung 47 hinein geführt sind.

In einem nicht dargestellten Ausführungsbesipiel ist die Ausnehmung 47 auf den Querschnitt von doppelt isolierten Elektrokabeln ausgerichtet und weist beispielsweise 8mm Durchmesser auf. Beim Lampendübel kann auch eine zentrale Ausnehmung mit einem Durchmesser von 20mm zweckmässig sein, welche ebenfalls mit einer Durchbrechschicht von der Kammer getrennt ist. Diese Abmessungen sind zweckmässig für Anwendungen, bei denen nicht Rohre sondern lediglich Kabel verlegt werden.

Zur Illustration von möglichen Variationen auch der anderen Ausführungsbeispiele ist beim Lampendübel die Profilierung der Vertiefung 49 in zwei sich kreuzenden Richtungen ausgeführt. Dies erlaubt die Montage des Lampendübels auf einer bereits am Untergrund befestigten Schiene 52 in zwei um 90 Grad gegeneinander gedrehten Ausrichtungen. Daher kann die Zuführung der Elektrorohre senkrecht oder parallel zur Ausrichtung der Schiene 52 gewählt werden.

Es ist auch möglich, Ausnehmungen 47 und Kanäle 48 nicht auf der selben Seite, sondern z.B. auf zwei benachbarten Seiten des Körpers auszubilden. Es können bei allen Beispielen anders geformte Vertiefungen, z.B. solche wie beim Ausführungsbeispiel gemäss Figur 1, vorgesehen werden. Als Vertiefung 49 könnte auch eine zentrisch im Körper angeordnete Höhlung mit einer Achsrichtung parallel zur Achsrichtung der zylindrischen Kammer 41 oder 40 in der Rückfläche ausgebildet sein, in welcher Höhlung ein stabförmig senkrecht von der Wand abstehendes Halteelement Aufnahme findet.

Weitere Variationsmöglichkeiten sind bei allen Ausführungsbeispielen vorhanden. Die Figuren 18 bis 20 zeigen deren drei. So ist es möglich, gemäss Figur 18 auf die Ausbildung eines Kanals 48 zu verzichten. Die Ausnehmungen 47 können auf jeder beliebigen Seite und für ein Rohr und/ oder für zwei Rohre vorgesehen sein, oder auch ganz weggelassen sein. Die Ausnehmung für den Anschluss von Elektrorohren kann als quer durch den Körper 21 durchführende Öffnung 57 ausgebildet sein, die entlang des Kammerbodens 46 oder entlang einer Kammerwand verläuft. In Figur 18 und 20 ist die Öffnung 57 durchgehend von einer zur gegenüberliegenden Seite ausgebildet. Eine solche durchführende Öffnung 57 kann auch in zwei senkrecht zueinander angeordneten Richtungen vorliegen (siehe Figur 20).

Die Richtung der profilierten Vertiefung 49 kann senkrecht zu der in den Ausführungsbeispielen 12 und 24 dargestellten Richtung verlaufen, so dass die Vertiefung von einer Seitenfläche 27 ohne Anschlussmöglichkeit für ein Elektrorohr zu einer ebensolchen gegenüberliegenden Seitenfläche 29 verläuft (vergleiche Fig. 19).

Zur Befestigung des Einlasskastens an einer Wand oder Decke können Halteelemente 51 oder Befestigungsschienen 52 vorgesehen sein. Solche sind in den Figuren 21 bis 26 dargestellt. Zum Zusammenwirken mit diesen Befestigungselementen 51,52 ist die profilartige Vertiefung 49 im Einlasskasten ausgebildet.

Unabhängig davon, ob eine Vertiefung 49 vorgesehen ist oder nicht, kann der Einlasskasten aber auch ohne solche Befestigungselemente befestigt werden. Dazu ist beispielsweise ein Einlasskasten gemäss Figur 1 in einer Öffnung in einer Wand eingipsbar, wie dies mit herkömmlichen Einlasskasten gemacht wird. Der Einlasskasten kann auch mit mineralischem oder organischem Kleber an eine Wandoberfläche geklebt werden, oder mit durch den Körper 21 hindurchreichenden Schrauben am Untergrund befestigt werden.

Bevorzugt wird aber die Befestigung des Einlasskastens mittels eines zwischen dem Untergrund und dem Einlasskasten 11,12,13,14 vermittelnden Befestigungselements 51,52. Ein solches Element hat den Vorteil, dass es mit für den Elektromonteur gebräuchlichen Werkzeugen am Untergrund befestigt werden kann. Zu diesen gebräuchlichen Werkzeugen gehören ein 5mm Steinbohrer, dazu passende Dübel und Schrauben, und ein passender Schraubenzieher. Mit diesen Werkzeugen und diesem Verschleissmaterial kann die Befestigungsschiene 52 und das Halteelement 51 praktisch an jeglichem Untergrund befestigt werden.

Die Befestigungsschiene 52 ist ein Profil aus Blech. Das Blech ist u-förmig gebogen und jede Endkante 61 ist in das Innere des U oder nach Aussen gebogen. Mit der als Widerhaken wirkenden Endkante 61 kann die Befestigungsschiene im Material des Einlasskastens einhängen. Der Boden 63 des U ist nach Innen gewölbt. Die Wölbung kann erreicht werden durch eine einzige oder mehrere Biegekanten 65. Dank der Wölbung wird das Profil beim Anziehen der Befestigungsschrauben gespannt. Mit dem Flachdrücken der Wölbung im U-Profil wird die Verklemmung an den Seitenwänden vergrössert.

In Figur 21 sind beide Endkanten 61 nach Innen zurückgebogen. In Figur 22 sind die Endkanten 61 nach Aussen und in Richtung Boden 63 zurück gebogen. In Figur 23 sind in jedem Seitensteg 67 zwei Fenster in Form eines liegenden H ausgeschnitten, wobei die durch diese Einschnitte entstandenen fensterflügelartigen Nasen 69 nach Aussen aufgebogen sind und daher in das Material des Einlasskastens 12,13,14 einschneiden können. Die Nasen 69 besitzen Kanten, die in den Kunststoffschaum einschneiden und als Widerhaken dienen. Da diese Kanten senkrecht zu den Endkanten 61 verlaufen, sind damit Schiebebewegungen des Einlasskastens 12,13,14 entlang der Achse der Befestigungsschiene 52 verhindert.

In Figur 24 sind die Seitenstege lediglich mit einer Ausbuchtung 69 versehen, die in das Material des Einlasskastens einpressen kann. Diese stumpfe Verformung des Materials des Körpers 21 durch die Ausbuchtung 69 lässt unter erhöhtem Kraftaufwand eine korrigierende Verschiebung des Einlasskastens entlang der Achse der Befestigungsschiene 52 zu.

Wie in Fig. 25 gezeigt, können als Widerhaken ausgebildete Nasen 69 auch endständig an der Befestigungsschiene 52 ausgebildet sein. Dies bedingt jedoch, dass die Befestigungsschiene 52 kürzer ausgebildet ist als die Länge der profilartigen Vertiefung 49. Um eine Korrektur der Lage des Einlasskastens zu ermöglichen ist eine kürzere Ausbildung der Befestigungsschiene aber ohnehin vorzuziehen. In Figur 25 ist ebenfalls dargestellt, dass die Endkanten 61 nicht symmetrisch umgelegt sein müssen, sondern auf dieselbe Seite gebogen sein können.

Das Halteelement 51 gemäss Figur 26 unterscheidet sich von den Befestigungsschienen im Grunde lediglich durch veränderte Proportionen. Da die Arme 53 den Einlasskasten von Aussen angreifen sollen, ist deren Abstand durch die Dimension des Einlasskastens 11 gegeben. Die Endkanten 61 sollen in die zu den Seitenflächen 27,29 parallelen Vertiefungsflächen der Vertiefungen 49 einhaken. Der Boden 63 kann ebenflächig ausgebildet sein.

Zur Befestigung dieser Befestigungselemente 51, 52 sind im Boden 63 jeweils ein oder zwei Löcher 55, insbesondere Langlöcher, vorhanden. Die Langlöcher stehen bezüglich deren Längsausrichtung vorzugsweise senkrecht zueinander.

Ein bevorzugter Einlasskasten 12 besitzt zusammenfassend eine Kammer 41 zur Aufnahme von Elektro-Anschlussteilen wie Steckdosen, Schalter oder Leitungsverbinder. Diese Kammer ist in einem extrudierten Polystyrol=Körper 21 ausgebildet. Der massive Schaumstoffkörper 21 erlaubt ein Eindrehen von beliebigen Schrauben in die Frontfläche 23, gewährleistet eine hohe Ausreisskraft, und eignet sich vorzüglich zur Anordnung in einer Wärmedämmschicht einer Verbundfassade. Die Montage des Einlasskastens 12 erfolgt über eine Schiene 52, welche mit Schrauben und Dübeln am Untergrund befestigt werden kann, und auf welche der Körper 21 mit einer dafür vorgesehenen Vertiefung 49 aufsteckbar ist.

## Patentansprüche

1. Unterputz-Einlasskasten (11,12,13,14) mit einer durch eine frontseitige Öffnung (43) zugänglichen Kammer (40,41,42) zur Aufnahme von elektrischen Anschlussteilen, mit einem die Kammer (40,41,42) rückwärtig wenigstens teilweise abschliessenden Kammerboden (46) und einer die Kammer seitlich ringsum wenigstens teilweise abschliessenden Kammerwandung (45), und mit einer Frontfläche (23), in welcher Frontfläche (23) die frontseitige Öffnung (43) der Kammer (40,41,42) angeordnet ist, welche Frontfläche (23) um die Öffnung (43) herum Montagebereiche (24) aufweist, in welche eine Montageschraube einschraubbar ist, beispielsweise für die Montage einer Frontplatte auf die Frontfläche (23), **dadurch gekennzeichnet, dass** der Einlasskasten (11,12,13,14) als Hartschaumstoffkörper (21) ausgebildet ist, dessen Körperoberfläche im Wesentlichen durch den Kammerboden (46) die Kammerwandung (45), die Frontfläche (23), eine senkrecht zur Frontfläche (23) stehende Umfassungsfläche (31) und eine zur Frontfläche (23) parallele rückwärtige Rückfläche (25) gebildet ist, wobei der Hartschaumstoffkörper (21) zumindest von den Montagebereichen (24) rückwärts zwischen der Kammerwandung (45) und der Umfassungsfläche (31) derart prismatisch ausgeformt ist, dass darin die ganze Länge des Schraubereschafts einer senkrecht in die Frontfläche (23) eingeschraubten Montageschraube angeordnet werden kann.

2. Einlasskasten nach Anspruch 1, **dadurch gekennzeichnet, dass** der Hartschaumstoffkörper (21) im Wesentlichen quaderförmig ausgebildet ist und in wenigstens einer der sechs Flächen des Quaders eine Höhlung (40,41,42,47,48,49,57) aufweist.

3. Einlasskasten nach Anspruch 1 oder 2, **dadurch gekennzeichnet, dass** die Rückfläche (25) in einem Abstand zur Frontfläche (23) angeordnet ist, welcher Abstand einer üblichen Dämmschichtstärke von Hartschaumstoff-Dämmplatten entspricht, insbesondere 3mm grösser ist.

4. Einlasskasten nach einem der vorangehenden Ansprüche, **gekennzeichnet durch** eine zusätzlich zur Kammer (40,41,42) im Hartschaumstoffkörper (21) ausgebildeten Höhlung (47,48) zum Einlegen eines Elektrorohres oder Elektrokabels in den Einlasskasten (11,12,13,14).

5. Einlasskasten nach Anspruch 4, **gekennzeichnet durch** eine Einführstelle zwischen der Höhlung (47,48) und der Kammer (41) zum Einführen einer Leitung in die Kammer (41) mit einer von blosser Hand oder mit Handwerkzeug in vorbestimmter Form ausbrechbaren Kammerwandung (45).

6. Einlasskasten nach einem der Ansprüche 4 oder 5, **dadurch gekennzeichnet, dass** die Höhlung ein u-förmiger Kanal (48) ist und die Öffnung einer offenen Längsseite des u-förmigen Kanals (48) in der Umfassungsfläche (31) liegt.

7. Einlasskasten nach einem der vorangehenden Ansprüche, **dadurch gekennzeichnet, dass** der Hartschaum über 150 kg/m3, vorzugsweise zwischen 160 und 200 kg/m3, besonders bevorzugt zwischen 170 und 180 kg/m3 wiegt.

8. Einlasskasten nach einem der vorangehenden Ansprüche, **dadurch gekennzeichnet, dass** der Hartschaumstoff ein expandierter Polystyrolschaum ist.

9. Einlasskasten nach einem der vorangehenden Ansprüche, **gekennzeichnet durch** ein separates Befestigungsteil (51,52), welches mittels Schrauben an einem Untergrund befestigbar ist, und eine Vertiefung (49) in der Rückfläche (25) des Einlasskastens (11,12,13,14) zur formschlüssigen Aufnahme des Befestigungsteils (51,52).

10. Einlasskasten nach Anspruch 9, **dadurch gekennzeichnet, dass** das Befestigungsteil (51,52) ein Blechprofil ist, welches einen U-förmigen Querschnitt aufweist.

11. Einlasskasten nach Anspruch 9 oder 10, **dadurch gekennzeichnet, dass** das Befestigungsteil (51,52) in den Hartschaumstoffkörper (21) widerhakende Kanten (61) oder Spitzen aufweist.

12. Einlasskasten nach einem der Ansprüche 9 bis 11, **dadurch gekennzeichnet, dass** das Befestigungsteil (51,52) Klemmstellen (69) aufweist, mit welchen beim Zusammenfügen von Befestigungsteil und Hartschaumstoffkörper (21) das Material des Hartschaumstoffkörpers (21) zusammengepresst wird.

13. Einlasskasten nach einem der Ansprüche 10 bis 12, **dadurch gekennzeichnet, dass** das Blechprofil (52) einen aufgewölbten Boden (63) aufweist, in welchem Löcher (55) für Befestigungsschrauben vorliegen.

## Claims

**1.** Built-in box (11, 12, 13, 4) with a chamber (40, 41, 42) accessible through a front-sided opening (43) for receiving electric connecting parts, with a chamber bottom (46) at least partially terminating the chamber (40, 41, 42) on the back side and a chamber wall (45) at least partially terminating the chamber laterally all around and with a front surface (23) in which the front-sided opening (43) of the chamber (40, 41, 42) is placed, which front surface (23) has mounting areas (24) around the opening (43) into which a mounting screw can be screwed, for example for the mounting of a front plate onto the front surface (23),
**characterized in**
**that** the built-in box (11, 12, 13, 14) is configured as a high-resistance foam body (21), the body surface of which is substantially formed by the chamber bottom (46), the chamber wall (45), the front surface (23), a containing surface (31) perpendicular to the front surface (23) and a rear surface (25) on the back parallel to the front surface (23), whereby the high-resistance foam body (21) is formed at least by the mounting areas (24) on the back side between the chamber wall (45) and the containing surface (31) in such a prismatic manner that the whole length of the screw shaft of a mounting screw screwed perpendicularly into the front surface (23) can be placed.

**2.** Built-in box according to claim 1, **characterized in that** the high-resistance body (21) is configured substantially as a right parallelepiped and has a hollow (40, 41, 42, 47, 48, 49, 57) in at least one of the six surfaces of the right parallelepiped.

**3.** Built-in box according to claim 1 or 2, **characterized in that** the rear surface (25) is placed at a distance from the front surface (23), the distance corresponding to an usual insulating layer thickness of high-resistance foam insulating plates, in particular being 3 mm thicker.

**4.** Built-in box according to any of the preceding claims, **characterized by** a hollow (47, 48) configured additionally to the chamber (40, 41, 42) in the high-resistance foam body (21) for inserting an electric tube or an electric cable into the build-in box (11, 12, 13, 14).

**5.** Built-in box according to claim 4, **characterized by** a leading-in spot between the hollow (47, 48) and the chamber (41) for guiding-in a line into the chamber (41) with a chamber wall (45) which can be broken out in a predetermined shape with the bare hand or with a tool.

**6.** Built-in box according to any of the claims 4 or 5, **characterized in that** the hollow is an U-shaped channel (48) and the opening of an open longitudinal side of the U-shaped duct (48) is situated in the containing surface (31).

**7.** Built-in box according to any of the preceding claims, **characterized in that** the high-resistance foam weights over 150 kg/m³, preferably between 160 and 200 kg/m³, particularly preferably between 170 and 180 kg/m³.

**8.** Built-in box according to any of the preceding claims, **characterized in that** the high-resistance foam is an expanded polystyrene foam.

**9.** Built-in box according to any of the preceding claims, **characterized by** a separate fixing part (51, 52) which can be fixed to a support by means of screws and which has a recess (49) in the rear surface (25) of the built-in box (11, 12, 13, 14) for the positive receiving of the fixing part (51, 52).

**10.** Built-in box according to claim 9, **characterized in that** the fixing part (51, 52) is a sheet metal profile which has an U-shaped cross section.

**12.** Built-in box according to any of the claims 9 to 11, **characterized in that** the fixing part (51, 52) has clamping spots (69) with which the material of the high-resistance body (21) is compressed during the assembly of the fixing part and the high-resistance body (21).

**13.** Built-in box according to any of the claims 10 to 12, **characterized in that** the sheet metal profile (52) has an arched bottom (63) in which there are holes (55) for the fixing screws.

## Revendications

1. Boîte à encastrer (11, 12, 13, 14) avec une chambre (40, 41, 42) accessible par une ouverture frontale (43) pour recevoir des pièces de branchement électriques, avec un fond de chambre (46) qui termine la chambre (40, 41, 42) au dos au moins partiellement et une paroi de chambre (45) qui termine la chambre latéralement tout autour au moins partiellement et avec une surface frontale (23) dans laquelle est placée l'ouverture frontale (43) de la chambre (40, 41, 42), laquelle surface frontale (23) présente autour de l'ouverture (43) des zones de montage (24) dans lesquelles une vis de montage peut être vissée, par exemple pour le montage d'une plaque frontale sur la surface frontale (23),
**caractérisée en ce**
**que** la boîte à encastrer (11, 12, 13, 14) est configurée comme un corps en matière alvéolaire dure (21) dont la surface de corps est formée substantiellement par le fond de la chambre (46), la paroi de la chambre (45), la surface frontale (23), une surface d'enceinte (31) qui est perpendiculaire à la surface frontale (23) et une surface de dos (25) arrière parallèle à la surface frontale (23), le corps en matière alvéolaire dure (21) étant formé au moins par les zones de montage (24) à l'arrière entre la paroi de la chambre (45) et la surface d'enceinte (31) de manière tellement prismatique que toute la longueur de la tige de la vis d'une vis de montage vissée perpendiculairement dans la surface frontale (23) peut y être placée.

2. Boîte à encastrer selon la revendication 1, **caractérisée en ce que** le corps de matière alvéolaire dure (21) est configuré substantiellement en forme de parallélépipède et présente une cavité (40, 41, 42, 47, 48, 49, 57) dans au moins l'une des six surfaces du parallélépipède.

3. Boîte à encastrer selon la revendication 1 ou 2, **caractérisée en ce que** la surface de dos (25) est placée espacée de la surface frontale (23), l'espace correspondant à l'épaisseur d'une couche d'isolation usuelle de panneaux isolants en matière alvéolaire dure, en particulier étant 3 mm plus épais.

4. Boîte à encastrer selon l'une des revendications précédentes, **caractérisée par** une cavité (47, 48) configurée en plus de la chambre (40, 41, 42) dans le corps de matière alvéolaire dure (21) pour mettre en place un tube électrique ou un câble électrique dans la boîte à encastrer (11, 12, 13, 14).

5. Boîte à encastrer selon la revendication 4, **caractérisée par** un endroit d'insertion entre la cavité (47, 48) et la chambre (41) pour insérer une ligne dans la chambre (41) avec une paroi de chambre (45) qui peut être cassée dans une forme prédéfinie à la main nue ou avec un outil.

6. Boîte à encastrer selon l'une des revendications 4 ou 5, **caractérisée en ce que** la cavité est un conduit en forme d'U (48) et l'ouverture d'un long côté ouvert du conduit en forme d'U (48) se situe dans la surface d'enceinte (31).

7. Boîte à encastrer selon l'une des revendications précédentes, **caractérisée en ce que** la mousse dure pèse plus de 150 kg/m³, de préférence entre 160 et 200 kg/m³, de manière particulièrement préférée entre 170 et 180 kg/m³.

8. Boîte à encastrer selon l'une des revendications précédentes, **caractérisée en ce que** la matière alvéolaire dure est une mousse de polystyrène expansé.

9. Boîte à encastrer selon l'une des revendications précédentes, **caractérisée par** une pièce de fixation séparée (51, 52) qui peut être fixée à un support au moyen de vis et qui présente un évidement (49) dans la surface arrière (25) de la boîte à encastrer (11, 12, 13, 14) pour le logement craboté de la pièce de fixation (51, 52).

10. Boîte à encastrer selon la revendication 9, **caractérisée en ce que** la pièce de fixation (51, 52) est un profilé de tôle qui présente une section en forme d'U.

11. Boîte à encastrer selon la revendication 9 ou 10, **caractérisée en ce que** la pièce de fixation (51, 52) présente des arêtes à ardillon (61) ou des pointes à ardillon dans le corps en matière alvéolaire dure.

12. Boîte à encastrer selon l'une des revendications 9 à 11, **caractérisée en ce que** la pièce de fixation (51, 52) présente des endroits de serrage (69) avec lesquels la matière du corps en matière alvéolaire dure (21) est comprimée lors de l'assemblage de la pièce de fixation et du corps en matière alvéolaire dure (21).

13. Boîte à encastrer selon l'une des revendications 10 à 12, **caractérisée en ce que** le profilé de tôle (52) présente un fond bombé (63) dans lequel il y a des trous (55) pour des vis de fixation.
